# EUROPEAN PATENT SPECIFICATION

(11) **EP 2 597 133 B1**
(45) Date of publication and mention of the grant of the patent: **07.12.2016**
(21) Application number: 10854874.4
(22) Date of filing: 19.07.2010
(51) Int. Cl.: C09K 11/79, C09K 11/77

(54) **LUMINESCENT MATERIAL OF SILICATE AND PREPARING METHOD THEREOF**
LEUCHSTOFF AUS SILIKAT UNDVERFAHREN ZU SEINER HERSTELLUNG
MATÉRIAU LUMINESCENT DE SILICATE ET SON PROCÉDÉ DE FABRICATION

(43) Date of publication of application: 29.05.2013
(73) Proprietor: Ocean's King Lighting Science&Technology Co., Ltd., Guangdong 518054 (CN)
(72) Inventor: ZHOU, Mingjie, Guangdong 518054 (CN); SHI, Chaopu, Guangdong 518054 (CN); MA, Wenbo, Guangdong 518054 (CN)
(74) Representative: Johnson, Richard Alan
(86) International application number: PCT/CN2010/075246
(87) International publication number: WO 2012/009844

(56) References cited:
- EP-A1- 1 004 899
- WO-A1-2005/042812
- CN-A- 1 362 465
- CN-A- 101 760 195
- CN-A- 101 760 195
- US-A- 4 988 882
- US-B2- 7 161 287

## Description

### FIELD OF THE INVENTION

The present invention relates to luminescent material technology. More particularly, the invention relates to a luminescent material of silicate and preparing method thereof.

### BACKGROUND OF THE INVENTION

In the 1960s, Ken Shoulder proposed ideas based on field emission arrays (FEAs) electron beam microelectronic devices, thus, to design and produce panel display and light resource devices by using FEAs has drawn the public's attention. Similar to the working principle of conventional cathode-ray tube (CRT), such new field emission display lights and forms images by electron beam bombardment on red, green blue trichromatic fluorescent powder. Field emission display has potential advantages in luminance, visual angle, response time, working temperature range, energy consumption and other aspects.

A key to prepare field emission display of high performances is to prepare fluorescent powder of excellent performance. At present, fluorescent materials provided in field emission devices are commonly luminescent materials of traditional cathode-ray tube and projection television kinescope, such as sulfide series, oxide series and oxysulfide series fluorescent powders. As for sulfide series and oxysulfide series fluorescent powders, they have high luminance and electrical conductivity, but, under the large electron beam bombardment, they prone to decompose into elemental sulfur, which can poison the tip of cathode and produce other precipitates covering the fluorescent powder, so as to reduce the luminous efficiency of fluorescent powders, and shorten the life of a field emission device. Oxide series fluorescent powders have good stability but the luminous efficiency is not high enough, and the materials are generally insulators, both of them have to be improved and enhanced. EP 1004899 A1 discloses a material Lu_{1.78}Gd_{0.202}Ce_{0.0015}SiO₅. This scintillating material is based on an oxyorthosilicate crystal, comprising cerium Ce and crystallized in the structural type Lu₂Si0₅ the composition of which is represented by the chemical formula Lu₁ A₁₋ₓCeₓSiO₅ where A - Lu and at least one of the elements of the group Gd, Sc, Y, La, Pr, Nd, Sm, Eu, Tb, Dy, Ho, Er, Tm, Yb, wherein it contains at least one element of the group Ti, Zr, Sn, Hf, As, V, Nb, Sb, Ta, Mo, W, Ag may also be present.

### SUMMARY OF THE INVENTION

In view of this, the present invention provides a luminescent material of silicate doped with Ce³⁺, Tb³⁺ and Ag ion, said luminescent material of silicate has good stability and high luminous efficiency.

Also, a simple and low-cost method for preparing luminescent material of silicate is provided.

The technical solution of the present invention to solve the technical problem is:

A luminescent material of silicate, wherein said luminescent material of silicate has a formula of Ln_{2-x-y}SiO₅:Ceₓ,Tb_{y},Ag_{z}, wherein, Ln is one of Y, Gd, La and Lu, x is in a range of 0<x≤0.05, y is in a range of 0.01≤y≤0.25, z is in a range of 0<z≤0.005.

And, a method for preparing luminescent material of silicate, comprising:

weighing the source compound of Ln, the source compound of Ce, the source compound of Tb, the source compound of Ag and silica aerogel according to the stoichiometric ratio of corresponding elements in Ln_{2-x-y}SiO₅:Ceₓ,Tb_{y},Ag_{z}; wherein, Ln is one of Y, Gd, La and Lu, x is in a range of 0<x≤0.05, y is in a range of 0.01≤y≤0.25, z is in a range of 0<z≤0.005;

dissolving the silica aerogel in the alcoholic solution of the source compound of Ag, then stirring, drying and sintering successively to obtain silica aerogel containing Ag;

mixing the weighed source compound of Ln, source compound of Ce, source compound of Tb and silica aerogel containing Ag, after that, sintering under reducing atmosphere to obtain said luminescent material of silicate having a formula of Ln_{2-x-y}SiO₅:Ceₓ, Tb_{y},Ag_{z}.

In said luminescent material of silicate and preparing method thereof, said luminescent material of silicate doped with Ce³⁺ and Tb³⁺ can emit warm white light under the excitation of electron beam. Additionally, elemental Ag in said luminescent material of silicate improves effectively the stability and luminous efficiency of said luminescent material of silicate. In said preparing method of silicate, silica aerogel containing Ag is prepared first, then mixed with other components and calcined to obtain luminescent material, thus the preparing method is simple, low-cost and can be widely used in manufacturing.

### BRIEF DESCRIPTION OF THE DRAWINGS

Further description of the present invention will be illustrated, which combined with embodiments in the drawings:
Fig.1 is a cathodoluminescence spectrum of luminescent material of silicate excited by cathode ray under 5KV acceleration voltage in Example 4 of the present invention with respect to fluorescent powder Y_{1.89}SiO₅:Ce_{0.01},Tb_{0.1} which is tested under the same conditions. Herein, curve 10 is the cathodoluminescence spectrum of Y_{1.89}SiO₅:Ce_{0.01},Tb_{0.1},Ag_{0.0007} in Example 4 of the present invention; curve 11 is the cathodoluminescence spectrum of the fluorescent powder Y_{1.89}SiO₅:Ce_{0.01},Tb_{0.1}.
Fig. 2 is a cathodoluminescence spectrum of luminescent material of silicate excited by cathode ray under 5kv acceleration voltage in Example 7 of the present invention.
Fig. 3 is a flow chart of the method for preparing luminescent material of silicate of the present invention.

### DETAILED DESCRIPTION OF ILLUSTRATED EMBODIMENTS

Further description of the present invention will be illustrated, which combined with embodiments in the drawings, in order to make the purpose, the technical solution and the advantages clearer. While the present invention has been described with reference to particular embodiments, it will be understood that the embodiments are illustrative and that the invention scope is not so limited.

A luminescent material of silicate of the present invention has a formula of Ln_{2-x-y}SiO₅:Ceₓ,Tb_{y},Ag_{z}, wherein, Ln is one of Y, Gd, La and Lu, x is in a range of 0<x≤0.05, y is in a range of 0.01≤y≤0.25, z is in a range of 0<z≤0.005.

Preferably, said x is in the range of 0.001 to 0.04, y is in the range of 0.03 to 0.2, z is in the range of 0.00003 to 0.003.

In said luminescent material of silicate and preparing method thereof, said luminescent material of silicate doped with Ce³⁺ and Tb³⁺ can emit warm white light under the excitation of electron beam. Additionally, elemental Ag in said luminescent material of silicate improves effectively the stability and luminous efficiency of said luminescent material of silicate. A further improvement can be achieved by adjusting ratio of elements in said luminescent material of silicate. For example, the x in the formula of said luminescent material of silicate Ln_{2-x-y}SiO₅:Ceₓ,Tb_{y},Ag_{z} is in a preferred range of 0.001≤x≤0.04, y is in a preferred range of 0.03≤y≤0.2, z is in a preferred range of 0.00003≤z≤0.003. In is the important component (element) of said luminescent material of silicate, which forms the molecular structure of the luminescent material. Because the properties of Y, Gd, La and Lu are close, so the molecular structure of the luminescent material will not change even they replace each other.

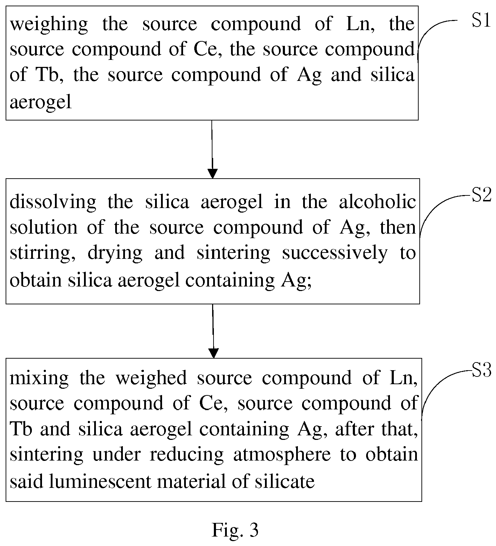

As shown in Fig. 3, a method for preparing luminescent material of silicate, comprising:
S1: weighing the source compound of Ln, the source compound of Ce, the source compound of Tb, the source compound of Ag and silica aerogel according to the stoichiometric ratio of corresponding elements in Ln_{2-x-y}SiO₅:Ceₓ,Tb_{y},Ag_{z}; wherein, Ln is one of Y, Gd, La and Lu, x is in a range of 0<x≤0.05. y is in a range of 0.01 ≤y≤0.25, z is in a range of 0*<*z≤0.005;
S2: dissolving the silica aerogel in the alcoholic solution of the source compound of Ag, then stirring, drying and sintering successively to obtain silica aerogel containing Ag;
S3: mixing the weighed source compound of Ln, source compound of Ce, source compound of Tb and silica aerogel containing Ag, after that, sintering under reducing atmosphere to obtain said luminescent material of silicate having a formula of Ln_{2-x-y}SiO₅:Ceₓ,Tb_{y},Ag_{z}.

In said S1 step of the preparing method of luminescent material of silicate, said source compound of Ln is preferably at least one of lanthanide oxides, lanthanide nitrates, lanthanide carbonates and lanthanide oxalates; said source compound of Ce is preferably at least one of cerium oxides, cerium nitrates, cerium carbonates and cerium oxalates; said source compound of Tb is preferably at least one of terbium oxides, terbium nitrates, terbium carbonates and terbium oxalates; said source compound of Ag is preferably at least one of silver nitrates or / and nano Ag colloidal particle; the aerogel used for silica aerogel is purchased on the market, such as aerogel produced by Nano Hi-Tech CO., LTD.

In said S2 step of the preparing method of luminescent material of silicate, said stirring is carried out in sonicator at 50°C to 75°C, and the time of stirring is in the range of 0.5 to 3h, the sonicator is used to aid mixing silica aerogel and the source compound of Ag in alcoholic solution, preferably, the time of sonication is 10min, but not limited to it; said drying is carried out at 60°C to 150°C; said sintering is carried out at 600°C to 1000°C.

In said S2 step, the aperture of selected silica aerogel is in the preferred range of 20 to 100nm, the porosity is in the preferred range of 92% to 98%; said sintering is preferably carried out at 600°C to 1300°C for 0.5 to 3h; preferably, said alcoholic solution is ethanol, but not limited to it, the concentration of Ag ion in alcoholic solution is in the preferred range of 1.5×10⁻⁵ to 1.25×10⁻³mol/L.

In said S3 step of the preparing method of luminescent material of silicate, said sintering under reducing atmosphere is carried out preferably at 1300°C to 1600°C, the time of sintering is in the preferred range of 1 to 8h; said reducing atmosphere is preferably one of mixed gases of N₂ and H₂, or CO, or H₂, herein, the volume ratio of N₂ to H₂ is preferably 95:5, but not limited to it; sintering is carried out under reducing atmosphere so as to get Ce and Tb all in the +3 valence state, and elemental Ag in molecular form by reducing Ce and Tb in the +4 valence state, and Ag ion during the chemical process, ultimately, Ln_{2-x-y}SiO₅:Ceₓ,Tb_{y},Ag_{z} compound is obtained, the luminescence property of Ln_{2-x-y}SiO₅:Ceₓ,Tb_{y},Ag_{z} is effectively guaranteed. Herein, reducing atmosphere is mixed gases comprising reducing gas of which the content is less than 10% by volume fraction.

In said preparing method of silicate, silica aerogel containing Ag is firstly prepared by high-temperature solid phase method, then mixed with other components and calcined to obtain luminescent material, thus the preparing method is simple, low-cost and can be widely used in manufacturing.

Special embodiments are disclosed as follows to demonstrate preparing method of luminescent material of silicate and the performances of it.

### Example 1

### Preparation of Y_{1.989}SiO₅:Ce_{0.001},Tb_{0.01},Ag_{0.00003} by high-temperature solid-phase method

Weighing 0.3g of silica aerogel, dissolving in 10mL of ethanol solution containing 1.5×10⁻⁵mol/L AgNO₃, stirring at 50°C for 3h, then sonicating for 10min. Drying at 60°C, and grinding the dried samples well, pre-sintering at 600°C for 4h, silica aerogel containing Ag is obtained. Weighing 1.4201g of Y₂(CO₃)₃, 0.0009g of Ce₂(CO₃)₃ and 0.0099g of Tb₂(CO₃)₃ and 0.2404g of silica aerogel containing Ag, mixing well. Sintering under reducing atmosphere of mixed gases consisting of 95%N₂ and 5%H₂ at 1300°C and keep the temperature constant for 8h, then cooling down to room temperature, luminescent material Y_{1.989}SiO₅:Ce_{0.001},Tb_{0.01},Ag_{0.00003} is obtained, which can emit warm white light under the excitation of electron beam.

### Example 2

### Preparation of La_{1.962}SiO₅:Ce_{0.008},Tb_{0.03},Ag_{0.00007} by high-temperature solid-phase method

Weighing 0.4g of silica aerogel, dissolving in 20mL of ethanol solution containing 2.345×10⁻⁵mol/L nano Ag colloidal particle, stirring at 60°C for 2h, then sonicating for 10min. Drying at 80°C, and grinding the dried samples well, pre-sintering at 800°C for 2h, silica aerogel containing Ag is obtained. Weighing 1.2784g of La₂O₃, 0.0055g of CeO₂ and 0.0224g of Tb₄O₇ and 0.2404g of silica aerogel containing Ag, mixing well. Sintering under reducing atmosphere of mixed gases consisting of 95%N₂ and 5%H₂ at 1450°C and keep the temperature constant for 4h, then cooling down to room temperature, luminescent material La_{1.962}SiO₅:Ce_{0.008},Tb_{0.03},Ag_{0.00007} is obtained, which can emit warm white light under the excitation of electron beam.

### Example 3

### Preparation of Gd_{1.76}SiO₅:Ce_{0.04},Tb_{0.2},Ag_{0.0001} by high-temperature solid-phase method

Weighing 1.0g of silica aerogel, dissolving in 30mL of ethanol solution containing 5.43×10⁻⁴mol/L nano Ag colloidal particle, stirring at 70°C for 0.5h, then sonicating for 10min. Drying at 150°C, and grinding the dried samples well, pre-sintering at 1000°C for 0.5h, silica aerogel containing Ag is obtained. Weighing 2.4168g of Gd(NO₃)₃, 0.0521g of Ce(NO₃)₃ and 0.2760g of Tb(NO₃)₃ and 0.2404g of silica aerogel containing Ag, mixing well. Sintering under reducing atmosphere of CO at 1600°C and keep the temperature constant for 1h, then cooling down to room temperature, luminescent material Gd_{1.76}SiO₅:Ce_{0.04},Tb_{0.2},Ag_{0.001} is obtained, which can emit warm white light under the excitation of electron beam.

### Example 4

### Preparation of Y_{1.89}SiO₅:Ce_{0.01},Tb_{0.1},Ag_{0.0007} by high-temperature solid-phase method

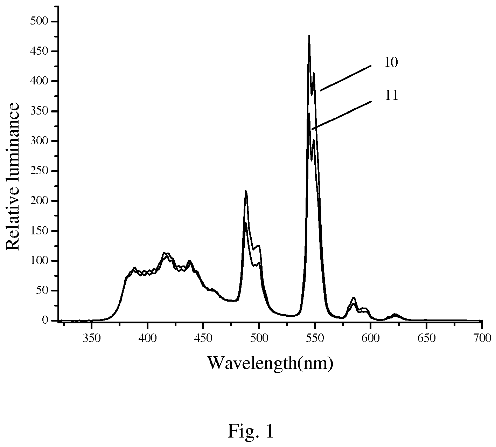

Weighing 0.4g of silica aerogel, dissolving in 15mL of ethanol solution containing 3.1266×10⁻⁴mol/L nano Ag colloidal particle, stirring at 60°C for 1.5h, then sonicating for 10min. Drying at 70°C, and grinding the dried samples well, pre-sintering at 800°C for 2h, silica aerogel containing Ag is obtained. Weighing 0.8535g of Y₂O₃, 0.0055g of CeO₂ and 0.0747g of Tb₄O₇ and 0.2404g of sintered silica aerogel, mixing well. Sintering under reducing atmosphere of mixed gases consisting of 95%N₂ and 5%H₂ at 1500°C and keep the temperature constant for 4h, then cooling down to room temperature, luminescent material Y_{1.89}SiO₅:Ce_{0.01},Tb_{0.1},Ag_{0.00007} is obtained, which can emit warm white light under the excitation of electron beam. Fig.1 is a cathodoluminescence spectrum of luminescent material of silicate in Example 4 of the present invention with respect to fluorescent powder Y_{1.89}SiO₅:Ce_{0.01},Tb_{0.1}. Herein, curve 10 indicates Y_{1.89}SiO₅:Ce_{0.01},Tb_{0.1},Ag_{0.0007} in Example 4 of the present invention; curve 11 indicates the fluorescent powder Y_{1.89}SiO₅:Ce_{0.01},Tb_{0.1}. It can be seen from Fig. 1 that luminescent material of the present invention shows strong broadband emission spectrum in the range of 360 to 500nm, and a narrow band peak appears at 544nm, the luminous intensity at 544nm is higher than that of Y_{1.89}SiO₅:Ce_{0.01},Tb_{0.1}. The luminous intensity of luminescent material of the present invention exceeds that of fluorescent powder Y_{1.89}SiO₅:Ce_{0.01},Tb_{0.1} without being doped with Ag by 38%. The luminescent material prepared of the present invention has advantages of good stability and high luminous efficiency.

### Example 5

### Preparation of Lu_{1.73}SiO₅:Ce_{0.02},Tb_{0.25},Ag_{0.003} by high-temperature solid-phase method

Weighing 0.35g of silica aerogel, dissolving in 25mL of propanol solution containing 7.08×10⁻⁴mol/L AgNO₃, stirring at 65°C for 1.5h, then sonicating for 10min. Drying at 120°C, and grinding the dried samples well, pre-sintering at 1000°C for 2h, silica aerogel containing Ag is obtained. Weighing 2.1244g of Lu₂(C₂O₄)₃, 0.0184g of Ce₂(CO₃)₃ and 0.2909g of Tb₂(C₂O₄)₃ and 0.2404g of sintered silica aerogel, mixing well. Sintering under reducing atmosphere of H₂ at 1400°C and keep the temperature constant for 6h, then cooling down to room temperature, luminescent material Lu_{1.73}SiO₅:Ce_{0.02},Tb_{0.25},Ag_{0.003} is obtained, which can emit warm white light under the excitation of electron beam.

### Example 6

### Preparation of Gd_{1.9}SiO₅:Ce_{0.05},Tb_{0.05},Ag_{0.0005} by high-temperature solid-phase method

Weighing 0.3g of silica aerogel, dissolving in 20mL of ethanol solution containing 1.25×10⁻³mol/L AgNO₃, stirring at 60°C for 2h, then sonicating for 10min. Drying at 100°C, and grinding the dried samples well, pre-sintering at 800°C for 2h, silica aerogel containing Ag is obtained. Weighing 2.1983g of Gd₂(C₂O₄)₃, 0.0540g of Ce₂(C₂O₄)₃ and 0.0582g of Tb₂(C₂O₄)₃ and 0.2404g of sintered silica aerogel, mixing well. Sintering under reducing atmosphere of mixed gases consisting of 95%N₂ and 5%H₂ at 1450°C and keep the temperature constant for 4h, then cooling down to room temperature, luminescent material Gd_{1.9}SiO₅:Ce_{0.05},Tb_{0.05},Ag_{0.0005} is obtained, which can emit warm white light under the excitation of electron beam.

### Example 7

### Preparation of Y_{1.89}SiO₅:Ce_{0.01},Tb_{0.1},Ag_{0.0004} by high-temperature solid-phase method

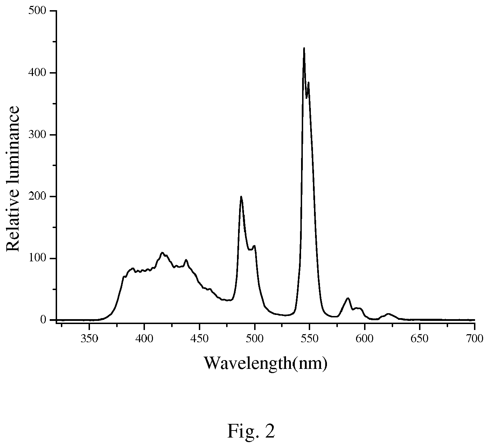

Weighing 0.28g of silica aerogel, dissolving in 15mL of ethanol solution containing 1.2266×10⁻⁴mol/L nano Ag colloidal particle, stirring at 60°C for 2h, then sonicating for 10min. Drying at 70°C, and grinding the dried samples well, pre-sintering at 900°C for 2h, silica aerogel containing Ag is obtained. Weighing 0.8535g of Y₂O₃, 0.0055g of CeO₂ and 0.0747g of Tb₄O₇ and 0.2404g of silica aerogel containing Ag, mixing well. Sintering under reducing atmosphere of mixed gases consisting of 95%N₂ and 5%H₂ at 1450°C and keep the temperature constant for 4h, then cooling down to room temperature, luminescent material Y_{1.89}SiO₅:Ce_{0.01},Tb_{0.1},Ag_{0.00004} is obtained, which can emit warm white light under the excitation of electron beam. The cathodoluminescence spectrum of said luminescent material of silicate Y_{1.89}SiO₅:Ce_{0.01},Tb_{0.1},Ag_{0.0004} is shown in Fig. 2. It can be seen from Fig. 2 that luminescent material of the present invention shows strong broadband emission spectrum in the range of 360 to 500nm, and a narrow band peak appears at 544nm, which is extremely similar to luminescent material of silicate of Example 4, indicating that the luminescent material of silicate of the present embodiment has stable performance. The cathodoluminescence spectrums of the present embodiment and Example 4 are produced by a Shimadzu spectrofluorometer RF-5301PC, and the test conditions are: cathode ray excitation, 5KV acceleration voltage.

## Claims

1. A luminescent material of silicate, wherein said luminescent material of silicate has a formula of Ln_{2-x-y}SiO₅:Ceₓ,Tb_{y},Ag_{z}, wherein, Ln is one of Y, Gd, La and Lu, x is in a range of 0<x≤0.05, y is in a range of 0.01≤y≤0.25, z is in a range of 0<z≤0.005.

2. The luminescent material of silicate as in claim 1, wherein said x is in the range of 0.001 to 0.04, y is in the range of 0.03 to 0.2, z is in the range of 0.00003 to 0.003.

3. A method for preparing luminescent material of silicate, comprising:
weighing the source compound of Ln, the source compound of Ce, the source compound of Tb, the source compound of Ag and silica aerogel according to the stoichiometric ratio of corresponding elements in Ln_{2-x-y}SiO₅:Ceₓ,Tb_{y},Ag_{z}; wherein, Ln is one of Y, Gd, La and Lu, x is in a range of 0<x≤0.05, y is in a range of 0.01≤y≤0.25, y is in a range of 0<z≤0.005;
dissolving the silica aerogel in the alcoholic solution of the source compound of Ag, then stirring, drying and sintering successively to obtain silica aerogel containing Ag;
mixing the weighed source compound of Ln, source compound of Ce, source compound of Tb and silica aerogel containing Ag, after that, sintering under reducing atmosphere to obtain said luminescent material of silicate having a formula of Ln_{2-x-y}SiO₅:Ceₓ,Tb_{y},Ag_{z}.

4. The method for preparing luminescent material of silicate as in claim 3, wherein:
said source compound of Ln is at least one of lanthanide oxides, lanthanide nitrates, lanthanide carbonates and lanthanide oxalates;
said source compound of Ce is at least one of cerium oxides, cerium nitrates, cerium carbonates and cerium oxalates;
said source compound of Tb is at least one of terbium oxides, terbium nitrates, terbium carbonates and terbium oxalates;
said source compound of Ag is at least one of silver nitrates or / and nano Ag colloidal particle.

5. The method for preparing luminescent material of silicate as in claim 3, wherein in said preparation of silica aerogel containing Ag, said stirring is carried out in sonicator at 50°C to 75°C, and the time of stirring is in the range of 0.5 to 3h; said drying is carried out at 60°C to 150°C; said sintering is carried out at 600°C to 1000°C.

6. The method for preparing luminescent material of silicate as in claim 3 or 5, wherein in said alcoholic solution of Ag, the concentration of Ag ion is in the range of 1.5×10⁻⁵ to 1.25×10⁻³mol/L, the solvent is ethanol.

7. The method for preparing luminescent material of silicate as in claim 3 or 5, wherein the aperture of said selected silica aerogel is in the range of 20 to 100nm, the porosity is in the range of 92% to 98%.

8. The method for preparing luminescent material of silicate as in claim 3 or 5, wherein in said preparation of silica aerogel containing Ag, said sintering is carried out at 600°C to 1300°C for 0.5 to 3h.

9. The method for preparing luminescent material of silicate as in claim 3, wherein said sintering under reducing atmosphere is carried out at 1300°C to 1600°C, the time of sintering is in the range of 1 to 8h.

10. The method for preparing luminescent material of silicate as in claim 3 or 9, wherein said reducing atmosphere is one of mixed gases of N₂ and H₂, or CO, or H₂.

## Patentansprüche

1. Lumineszierendes Silicatmaterial, wobei das lumineszierende Silicatmaterial eine Formel von Ln_{2-x-y}SiO₅:Ceₓ,Tb_{y},Ag_{z} aufweist, worin Ln eines von Y, Gd, La und Lu ist, x in einem Bereich von 0 < x ≤ 0,05 liegt, y in einem Bereich von 0,01 ≤ y ≤ 0,25 liegt, z in einem Bereich von 0 < z ≤ 0,005 liegt.

2. Lumineszierendes Silicatmaterial nach Anspruch 1, wobei x in dem Bereich von 0,001 bis 0,04 liegt, y in dem Bereich von 0,03 bis 0,2 liegt, z in dem Bereich von 0,00003 bis 0,003 liegt.

3. Verfahren zur Herstellung von lumineszierendem Silicatmaterial, umfassend:
Abwiegen der Quellenverbindung von Ln, der Quellenverbindung von Ce, der Quellenverbindung von Tb, der Quellenverbindung von Ag und Silica-Aerogel gemäß dem stöchiometrischen Verhältnis der entsprechenden Elemente in Ln_{2-x-y}SiO₅:Ceₓ,Tb_{y},Ag_{z}; worin Ln eines von Y, Gd, La und Lu ist, x in einem Bereich von 0 < x ≤ 0,05 liegt, y in einem Bereich von 0,01 ≤ y ≤ 0,25 liegt, z in einem Bereich von 0 < z ≤ 0,005 liegt;
Lösen des Silica-Aerogels in der alkoholischen Lösung der Quellenverbindung von Ag, anschließend aufeinanderfolgendes Rühren, Trocknen und Sintern, um Ag enthaltendes Silica-Aerogel zu erhalten;
Mischen der abgewogenen Quellenverbindung von Ln, Quellenverbindung von Ce, Quellenverbindung von Tb und Ag enthaltendem Silica-Aerogel, danach Sintern unter reduzierender Atmosphäre, um das lumineszierende Silicatmaterial mit einer Formel von Ln_{2-x-y}SiO₅:Ceₓ,Tb_{y},Ag_{z} zu erhalten.

4. Verfahren zur Herstellung von lumineszierendem Silicatmaterial nach Anspruch 3, wobei:
die Quellenverbindung von Ln zumindest eines von Lanthanoidoxiden, Lanthanoidnitraten, Lanthanoidcarbonaten und Lanthanoidoxalaten ist;
die Quellenverbindung von Ce zumindest eines von Ceroxiden, Cernitraten, Cercarbonaten und Ceroxalaten ist;
die Quellenverbindung von Tb zumindest eines von Terbiumoxiden, Terbiumnitraten, Terbiumcarbonaten und Terbiumoxalaten ist;
die Quellenverbindung von Ag zumindest eines von Silbernitraten oder/und kolloidem Ag-Nanoteilchen ist.

5. Verfahren zur Herstellung von lumineszierendem Silicatmaterial nach Anspruch 3, wobei in der Herstellung von Ag enthaltendem Silica-Aerogel das Rühren in einem Beschaller bei 50°C bis 75 °C durchgeführt wird und die Rührzeit in dem Bereich von 0,5 bis 3 Stunden liegt; das Trocknen bei 60°C bis 150°C durchgeführt wird; das Sintern bei 600 °C bis 1.000 °C durchgeführt wird.

6. Verfahren zur Herstellung von lumineszierendem Silicatmaterial nach Anspruch 3 oder 5, wobei in der alkoholischen Lösung von Ag die Konzentration von Ag-Ion in dem Bereich von 1,5 x 10⁻⁵ bis 1,25 x 10⁻³ mol/l liegt, wobei das Lösungsmittel Ethanol ist.

7. Verfahren zur Herstellung von lumineszierendem Silicatmaterial nach Anspruch 3 oder 5, wobei die Öffnung des ausgewählten Silica-Aerogels in dem Bereich von 20 bis 100 nm liegt, die Porosität in dem Bereich von 92 % bis 98 % liegt.

8. Verfahren zur Herstellung von lumineszierendem Silicatmaterial nach Anspruch 3 oder 5, wobei in der Herstellung von Ag enthaltendem Silica-Aerogel das Sintern 0,5 bis 3 Stunden lang bei 600 °C bis 1.300 °C durchgeführt wird.

9. Verfahren zur Herstellung von lumineszierendem Silicatmaterial nach Anspruch 3, wobei das Sintern unter reduzierender Atmosphäre bei 1.300 °C bis 1.600 °C durchgeführt wird, die Sinterzeit in dem Bereich von 1 bis 8 Stunden liegt.

10. Verfahren zur Herstellung von lumineszierendem Silicatmaterial nach Anspruch 3 oder 9, wobei die reduzierende Atmosphäre eine von einem Gasgemisch von N₂ und H₂ oder CO oder H₂ ist.

## Revendications

1. Matériau luminescent de silicate, dans lequel ledit matériau luminescent de silicate répond à la formule Ln_{2-x-y}SiO₅:Ceₓ, Tb_{y}, Ag_{z}, formule dans laquelle Ln représente l'un de Y, Gd, La et Lu, x se situe dans une plage de 0 < x ≤ 0,05, y se situe dans une plage de 0,01 ≤ y ≤ 0,25, z se situe dans une plage de 0 < z ≤ 0,005.

2. Matériau luminescent de silicate selon la revendication 1, dans lequel ledit x se situe dans la plage de 0,001 à 0,04, y se situe dans la plage de 0,03 à 0,2, z se situe dans la plage de 0,00003 à 0,003.

3. Procédé de préparation d'un matériau luminescent de silicate, comprenant :
la pesée du composé source de Ln, du composé source de Ce, du composé source de Tb, du composé source d'Ag et d'un aérogel de silice suivant le rapport stoechiométrique des éléments correspondants dans Ln_{2-x-y}SiO₅:Ceₓ,Tb_{y},Ag_{z} ; formule dans laquelle Ln représente l'un de Y, Gd, La et Lu, x se situe dans une plage de 0 < x ≤ 0,05, y se situe dans une plage de 0,01 ≤ y ≤ 0,25, z se situe dans une plage de 0 < z ≤ 0,005 ;
la dissolution de l'aérogel de silice dans la solution alcoolique du composé source d'Ag, puis l'agitation, le séchage et le frittage, successivement, pour obtenir un aérogel de silice contenant de l'Ag ;
le mélange du composé source de Ln, du composé source de Ce, du composé source de Tb et de l'aérogel de silice contenant de l'Ag pesés, ensuite, le frittage dans une atmosphère réductrice pour obtenir ledit matériau luminescent de silicate répondant à la formule Ln_{2-x-y}SiO₅ : Ceₓ, Tb_{y}, Ag_{z}.

4. Procédé de préparation d'un matériau luminescent de silicate selon la revendication 3, dans lequel :
ledit composé source de Ln est au moins l'un des oxydes de lanthanide, des nitrates de lanthanide, des carbonates de lanthanide et des oxalates de lanthanide ;
ledit composé source de Ce est au moins l'un des oxydes de cérium, des nitrates de cérium, des carbonates de cérium et des oxalates de cérium ;
ledit composé source de Tb est au moins l'un des oxydes de terbium, des nitrates de terbium, des carbonates de terbium et des oxalates de terbium ;
ledit composé source d'Ag est au moins l'un des nitrates d'argent ou/et d'une nanoparticule colloïdale d'Ag.

5. Procédé de préparation d'un matériau luminescent de silicate selon la revendication 3, dans lequel dans ladite préparation d'un aérogel de silice contenant de l'Ag, ladite agitation est réalisée dans un bain ultrasonique à une température de 50 °C à 75 °C, et le temps d'agitation se situe dans la plage de 0,5 à 3 h ; ledit séchage est réalisé à une température de 60 °C à 150 °C ; ledit frittage est réalisé à une température de 600 °C à 1 000 °C.

6. Procédé de préparation d'un matériau luminescent de silicate selon la revendication 3 ou 5, dans lequel dans ladite solution alcoolique d'Ag, la concentration de l'ion Ag se situe dans la plage de 1,5 × 10⁻⁵ à 1,25 × 10⁻³ mol/l, le solvant est l'éthanol.

7. Procédé de préparation d'un matériau luminescent de silicate selon la revendication 3 ou 5, dans lequel l'ouverture dudit aérogel de silice choisi se situe dans la plage de 20 à 100 nm, la porosité se situe dans la plage de 92 % à 98 %.

8. Procédé de préparation d'un matériau luminescent de silicate selon la revendication 3 ou 5, dans lequel dans ladite préparation d'un aérogel de silice contenant de l'Ag, ledit frittage est réalisé à une température de 600 °C à 1 300 °C pendant 0,5 à 3 h.

9. Procédé de préparation d'un matériau luminescent de silicate selon la revendication 3, dans lequel ledit frittage dans une atmosphère réductrice est réalisé à une température de 1 300 °C à 1 600 °C, le temps de frittage se situe dans la plage de 1 à 8 h.

10. Procédé de préparation d'un matériau luminescent de silicate selon la revendication 3 ou 9, dans lequel ladite atmosphère réductrice est l'un des gaz mixtes de N₂ et H₂, ou CO, ou H₂.
